# EUROPÄISCHE PATENTSCHRIFT

(11) **EP 2 853 797 B1**
(45) Veröffentlichungstag und Bekanntmachung des Hinweises auf die Patenterteilung: **06.01.2021**
(21) Anmeldenummer: 14190718.8
(22) Anmeldetag: 27.03.2013
(51) Int. Cl.: F16L 57/04, F16L 55/10, F16L 5/04

(54) **Brandschutzvorrichtung bei Übergang auf Kunststoffrohr**
Fire protection device in the transition to a plastic pipe
Dispositif de protection contre l'incendie lors du passage sur un tuyau en matière synthétique

(30) Priorität: 30.03.2012 DE 202012003242 U; 17.09.2012 DE 102012216562
(43) Veröffentlichungstag der Anmeldung: 01.04.2015
(62) Teilanmeldung aus: 13161256.6
(73) Patentinhaber: DOYMA GmbH & Co, 28876 Oyten (DE)
(72) Erfinder: Wulfes, Andreas, 28876 Oyten (DE); Lindenau, Andreas, 27726 Worpswede (DE); Berger, Markus, 57368 Linnestadt (DE)
(74) Vertreter: Eisenführ Speiser

(56) Entgegenhaltungen:
- DE-U1-202006 008 496
- DE-U1-202010 016 759
- IE-A1- 902 358
- US-A- 3 389 442
- US-A- 4 951 442
- US-A- 5 887 396
- US-A1- 2009 139 062

## Beschreibung

Die Erfindung betrifft eine Brandschutzvorrichtung zum brandsicheren Abschotten einer Verbindung zwischen einem brennbaren und einem feuerfesten Rohr gemäß dem Oberbegriff von Anspruch 1. Ferner betrifft die Erfindung eine Verwendung einer Brandschutzvorrichtung zum brandsicheren Abschotten einer Verbindung zwischen einem brennbaren und einem feuerfesten Rohr.

Brandschutzvorrichtungen zum Abschotten von Durchgangslöchern in Gebäudewänden sind im Allgemeinen bekannt. Auch sind solche Brandschutzvorrichtungen bekannt, die zum Abschotten von Rohren, insbesondere durch Durchgangslöcher in Gebäudewänden geführten Rohren, genutzt werden. Im Allgemeinen weisen derartige Brandschutzvorrichtungen ein unter Hitzeeinwirkung intumeszierendes Material, beispielsweise Blähgraphit, auf. Sofern dieses Material nicht innerhalb der Durchgangsöffnung angeordnet ist und sich somit nicht im Brandfall beim Aufblähen gegen die Laibung der Durchgangsöffnung abstützen kann, weisen derartige Brandschutzvorrichtungen in der Regel ein Gehäuse aus brandfestem Material auf. Ein solches Gehäuse mit einem in diesem angeordneten Brandschutzmaterial wird dann beispielsweise axial benachbart und im Wesentlichen koaxial zu einer Durchgangsöffnung in einer Gebäudewand um ein brennbares Rohr herum montiert. Im Brandfall wird das brennbare Rohr dann durch die Hitze erweicht und das intumeszierende Material bläht auf, drückt das erweichende Rohr zusammen und verschließt so den Durchgang. Eine derartige Brandschutzvorrichtung ist beispielsweise in DE 10 2008 031 018 A1 offenbart und wird im Allgemeinen als Brandschutzmanschette bezeichnet.

In Gebäuden existieren allerdings nicht nur Durchgangslöcher in Gebäudewänden, die im Brandfall abgeschottet werden müssen, sondern vielfach existieren, insbesondere im Abwasserbereich, Verbindungen zwischen brennbaren und feuerfesten Rohren, die im Brandfall zur Gefahr werden können, indem beispielsweise heißes Rauchgas durch das feuerfeste Rohr strömen kann, sobald das brennbare Rohr versagt hat. Derartige feuerfeste Rohre sind beispielsweise Gusseisenrohre, Hochtemperaturrohre oder so genannte SML-Rohre (Super-Metallit-Rohr). Um einen fluiddichten Übergang zwischen zweier Rohre zu gewährleisten, werden dichtende Rohrverbinder zwischen diesen Rohren eingesetzt. Solche Rohrverbinder sind auch unter dem Namen Konfix-Verbinder bekannt. Herkömmliche Konfix-Verbinder sind in der Regel aus einem Gummimaterial, welches nicht brandsicher ist.

Zur brandsicheren Verbindung eines brennbaren und eines feuerfesten Rohres sind daher brandsichere dichtende Rohrverbinder (Konfix-Verbinder) entwickelt worden. Ein derartiger Rohrverbinder ist beispielsweise in DE 10 2009 048 651 A1 offenbart. Ein dort vorgeschlagenes Verbindungsstück weist eine Dichtungsmanschette aus gummielastischem Material auf, die die beiden Rohre beabstandet voneinander miteinander verbindet, indem die beiden Rohre in Ausnehmungen an der Dichtungsmanschette einführbar sind. Ferner weist das Verbindungsstück ein Gehäuse auf, das um die Dichtungsmanschette herum angeordnet ist, wobei zwischen Dichtungsmanschette und Gehäuse intumeszierendes Brandschutzmaterial angeordnet ist. So wird erreicht, dass im Brandfall das gummielastische Material der Dichtungsmanschette in dem zwischen den beiden Rohren angeordneten Abschnitt durch das aufblähende Material zusammengedrückt wird, so dass der Durchgang verschlossen ist.

Zwar haben sich derartige brandsichere Rohrverbinder generell als zweckmäßig erwiesen, jedoch besteht der Bedarf, Verbindungen zwischen brennbaren und feuerfesten Rohren nachträglich brandsicher auszugestalten. Dazu ist es bisher erforderlich, den nicht brandsicheren Konfix-Rohrverbinder zu entfernen und sodann einen brandsicheren Rohrverbinder einzusetzen. Dies ist im Allgemeinen mit großem Aufwand verbunden.

DE 20 2010 016 759 U1 offenbart eine Brandschutzmanschette mit einem bei Hitzeeinwirkung intumeszierenden Material. An der Brandschutzmanschette sind Verbindungslaschen angeordnet, die jeweils einen gebogenen Abschnitt aufweisen, der innenseitig an der Außenseite eines Spannverbinders zum Arretieren und Abdichten zweier Rohrleitungen zueinander befestigt wird.

Aufgabe der vorliegenden Erfindung ist es daher, eine Brandschutzvorrichtung der eingangs genannten Art anzugeben, mittels der eine vereinfachte Montage und eine sichere Arretierung der Brandschutzvorrichtung im Verbindungsbereich zweier miteinander zu verbindender Rohre möglich ist.

Eine Brandschutzvorrichtung der eingangs genannten Art umfasst ein Gehäuse, welches wenigstens einen Halteabschnitt zum Befestigen der Brandschutzvorrichtung an dem feuerfesten Rohr und einen Stützabschnitt zum Aufnehmen eines Brandschutzelements aufweist, wobei die Brandschutzvorrichtung angepasst ist, um eine Verbindungsstelle eines brennbaren und eines feuerfesten Rohres, die mittels eines dichtenden Rohr-Verbinders verbunden sind, montiert zu werden. Der Stützabschnitt ist dazu angepasst ein Brandschutzelement, welches unter Hitzeeinwirkung intumeszierendes Material aufweist, aufzunehmen. Das Brandschutzelement ist beispielsweise als Wickelband oder als vollvolumiges Formteil ausgebildet, welches an den dichtenden Rohrverbinder angepasst ist. Der dichtende Rohrverbinder kann beispielsweise ein Konfix-Verbinder aus gummielastischem Material sein. Es ist ausreichend, für eine nachträgliche Sicherung einer bereits bestehenden Verbindung zwischen einem feuerfesten und einem brennbaren Rohr eine Vorrichtung bereitzustellen, die einerseits angepasst ist ein Mittel aufzunehmen, welches die Öffnung des feuerfesten Rohres zu verschließt, sobald das brennbare Rohr versagt und die andererseits Mittel aufweist, um das intumeszierende Material an Ort und Stelle zu halten, so dass der Durchgang verschlossen bleibt. Es ist ferner ein Gehäuse vorgesehen, welches wenigstens zwei verschiedene Abschnitte aufweist, nämlich einen Halteabschnitt und einen Stützabschnitt. Der Halteabschnitt ist dazu angepasst, an dem feuerfesten Rohr befestigt zu werden, so dass das Gehäuse bezogen auf das feuerfeste Rohr ortsfest angeordnet ist. Der Stützabschnitt hingegen nimmt das Brandschutzelement auf und bietet diesem im Falle des Aufblähens des intumeszierenden Brandschutzmaterials eine Abstützung. Die Brandschutzvorrichtung ist dabei so angepasst, dass diese um eine Verbindungsstelle insbesondere um einen Konfix-Verbinder herum montierbar ist. Dadurch ist ein nachträgliches Sichern derartiger Rohrverbindungen, insbesondere mittels Konfix-Verbindern, auf einfache Art und Weise möglich, ohne dass eine bereits bestehende Verbindung demontiert werden muss. Dies erspart einen erheblichen Zeitaufwand bei der Nachrüstung von brandsicheren Verbindungen. Ferner sind auch die Kosten reduziert, da der bereits vorhandene Konfix-Verbinder weiter genutzt werden kann. Dies kommt letztlich auch der Umwelt zugute, da Ressourcen geschont werden. Ferner ist bei einer derart nachträglich um die Verbindungsstelle montierten Brandschutzvorrichtung mit bloßem Auge gut zu erkennen, dass die Brandschutzvorrichtung montiert ist. So ist beispielsweise durch Wartungspersonal ein Überprüfen, ob sämtliche Verbindungsstellen brandsicher sind, besonders einfach möglich.

Gemäß einer ersten bevorzugten Ausführungsform ist ein Brandschutzelement radial innerhalb des Gehäuses an dem Stützabschnitt befestigt. In dieser bevorzugten Ausführungsform entfällt ein zusätzliches Montieren des Brandschutzelements vollständig. Dieses ist bereits an dem Gehäuse in dem Stützabschnitt befestigt. Alternativ oder zusätzlich ist es ferner möglich, beispielsweise ein Brandschutzwickelband zu nutzen, dieses um den Konfix-Verbinder herumzuschlagen und anschließend das Gehäuse über diese Verbindungsstelle zu montieren. Bevorzugt lassen sich auch Formteile aus Brandschutzmaterial nutzen.

Besonders bevorzugt ist an dem Gehäuse ferner wenigstens eine Spanneinrichtung zum klemmenden Verspannen des Gehäuses gegen das feuerfeste Rohr mittels des Halteabschnitts angeordnet. Eine solche Spanneinrichtung kann beispielsweise Schrauben oder auch Rohrschellen und derartiges aufweisen. Mittels der Spanneinrichtung ist die Brandschutzvorrichtung einfach an dem feuerfesten Rohr befestigbar, so dass diese im Wesentlichen ortsfest an diesem angeordnet ist. Die Spanneinrichtung ist dabei vorzugsweise derart ausgebildet, dass ein kraftschlüssiges Verbinden zwischen Gehäuse und dem feuerfesten Rohr erfolgt. Vorzugsweise ist die Spanneinrichtung ferner derart ausgestaltet, dass gewisse Durchmesser und Formabweichungen des feuerfesten Rohres ausgleichbar sind. Auch dadurch ist die Montage weiter vereinfacht.

In einer weiteren bevorzugten Ausführungsform ist das Gehäuse im Wesentlichen aus zwei Gehäuse-Halbschalen gebildet. Vorzugsweise ist das Gehäuse im Wesentlichen aus zwei separaten Gehäuse-Halbschalen gebildet. Vorzugsweise sind die Halbschalen im Wesentlichen symmetrisch ausgebildet. Bevorzugt bilden die beiden Gehäuse-Halbschalen gemeinsam ein im Wesentlichen rotationssymmetrisches Gehäuse. Die beiden Gehäuse-Halbschalen sind vorzugsweise mittels zweier Spanneinrichtungen gegeneinander und gegen das feuerfeste Rohr verspannbar. Während das Gehäuse vorzugsweise im Wesentlichen rotationssymmetrisch ist und eine etwa zylinderförmige Grundkonfiguration aufweist, bilden die Gehäuse-Halbschalen jeweils eine radiale Hälfte des Gehäuses, derart, dass das Gehäuse entlang seiner Längsachse und parallel zu dieser geteilt ist. Die beiden Gehäuse-Halbschalen sind dann vorzugsweise mittels zweier Spanneinrichtungen miteinander verbindbar. Alternativ ist an einer der Verbindungsstellen der Gehäuse-Halbschalen Mittel für eine formschlüssige Verbindung ausgebildet, wie beispielsweise Laschen und Ösen. An der anderen Verbindungsstelle ist dann vorzugsweise eine Spanneinrichtung vorgesehen. Vorzugsweise sind die beiden Gehäuse-Halbschalen mittels einer schwenkbaren Verbindung miteinander verbunden und mittels einer Spanneinrichtung gegeneinander und gegen das feuerfeste Rohr verspannbar. Demnach sind die beiden Gehäuse-Halbschalen bevorzugt gelenkig beispielsweise mittels eines Scharniers miteinander verbunden. Durch diese Gestaltung des Gehäuses, bestehend im Wesentlichen aus zwei Gehäuse-Halbschalen, ist die Brandschutzvorrichtung besonders einfach nachträglich um einen Rohrverbinder herum montierbar.

Vorzugsweise ist dabei in jeder Halbschale wenigstens ein Brandschutzelement angeordnet. Dadurch ist dieses einfach zusammen mit den beiden Halbschalen um die Verbindungsstelle anordenbar.

Weiterhin ist bevorzugt, dass das Brandschutzelement als Streifen ausgebildet und flächig auf der Innenseite des Gehäuses angeordnet ist. Dabei ist das Brandschutzelement in dem Stützabschnitt des Gehäuses an der Innenseite angeordnet. Vorzugsweise ist das Brandschutzelement an das Gehäuse geklebt oder geklammert. Beispielsweise sind an dem Gehäuse Laschen angeordnet, die das Brandschutzelement, welches Streifenform hat, halten. In einer bevorzugten Weiterbildung ist das Brandschutzelement lagenweise, d.h. in mehreren Streifen übereinandergeschichtet angeordnet. Vorzugsweise sind so viele Lagen vorgesehen, dass ausreichend Brandschutzmaterial vorhanden ist, um im Brandfall den Durchgang sicher zu verschließen. Das Volumenverhältnis von nicht aufgeblähtem Brandschutzmaterial zu aufgeblähtem Brandschutzmaterial variiert je nach Zusammensetzung des jeweiligen Materials und kann entsprechend des Anwendungsfalls ausgewählt und vorgesehen werden.

In einer weiteren bevorzugten Ausführungsform ist das Brandschutzelement als Formteil, insbesondere vollvolumiges Formteil ausgebildet. Vorzugsweise ist in jeder Gehäuse-Halbschale ein Formteil angeordnet. Das Formteil ist vorzugsweise ebenfalls halbschalenförmig ausgebildet und/oder bevorzugt aber elastisch und/oder plastisch verformbar oder mit Soll-Biegestellen ausgestattet. Eine innere Kontur des Formteils ist dabei vorzugsweise an die äußere Kontur des dichtenden Rohrverbinders, insbesondere Konfix-Verbinders angepasst. Dadurch ist die Herstellung vereinfacht. Es lassen sich verschiedene Formteile für verschiedene Rohrdurchmesser vorhalten. Ein derartiges Formteil kann beispielsweise mittels Gießen hergestellt werden. Unter dem Begriff vollvolumig wird verstanden, dass das Brandschutzelement nicht lagenförmig geschichtet aus beispielsweise einzelnen Wickelbandabschnitten ausgebildet ist, sonder massiv und vorzugsweise einstückig geformt ist. Vollvolumig schließt nicht aus, dass das Brandschutzelement segmentiert sein kann.

Weiterhin ist bevorzugt, dass an jeder Halbschale wenigstens eine sich radial erstreckende Verbindungslasche angeordnet ist und die Spanneinrichtung Mittel zum Verspannen der wenigstens zwei Laschen gegeneinander aufweist. Solche Mittel können beispielsweise Schrauben und Muttern sein, die durch korrespondierende Löcher in den Laschen greifen und so die beiden Laschen gegeneinander verspannen. Dies ist eine besonders einfache Möglichkeit, die Spanneinrichtung auszubilden. Laschen sind einfach herzustellen und die Spanneinrichtung ist sofort für jeden Monteur einfach verständlich. Dadurch sind die Herstellungskosten reduziert als auch die Montage vereinfacht.

Gemäß einer bevorzugten Weiterbildung weist das Gehäuse in dem Stützabschnitt einen wenigstens abschnittsweise größeren Durchmesser als in dem Halteabschnitt auf. In dem Halteabschnitt ist das Gehäuse vorzugsweise klemmend an dem feuerfesten Rohr montiert. Der Stützabschnitt stützt das Brandschutzelement beim Intumeszieren. Es ist nicht erforderlich, dass das Brandschutzelement unmittelbar an dem brennbaren Rohr bzw. an dem Rohrverbinder insbesondere Konfix-Verbinder in dem montierten Zustand anliegt. Indem das Gehäuse in dem Stützabschnitt einen wenigstens abschnittsweise größeren Durchmesser aufweist, ist ausreichend Raum, auch großvolumigere Brandschutzelemente vorzusehen. Ferner ist das Einsatzspektrum der Brandschutzvorrichtung erweitert, da der Stützabschnitt, in dem dieser wenigstens abschnittsweise einen größeren Durchmesser als der Halteabschnitt aufweist, über jede Art von üblichen Rohrverbindern montierbar ist.

Besonders bevorzugt sind der Halteabschnitt und der Stützabschnitt axial benachbart zueinander angeordnet. Dies ist besonders zweckmäßig, um eine platzsparende und sichere Montage zu realisieren.

Besonders bevorzugt weist das Gehäuse an einem axialen Ende des Stützabschnitts einen nach innen gerichteten Vorsprung auf. Vorzugsweise weist das Gehäuse an dem axialen Ende den nach innen gerichteten Vorsprung, welches gegenüberliegend zu dem Stützabschnitt angeordnet ist. Vorzugsweise ist in dieser Ausführungsform ferner der Durchmesser des Gehäuses im Stützabschnitt wenigstens abschnittsweise größer als im Halteabschnitt. So ist im Stützabschnitt im Wesentlichen eine innere ringförmige Kavität an dem Gehäuse ausgebildet, in die das Brandschutzelement anordenbar bzw. in der das Brandschutzelement befestigbar ist. So ist einerseits das Brandschutzelement im nicht aufgeschäumten Zustand geschützt, was insbesondere bei der Montage vorteilhaft ist. Andererseits bietet der nach innen gerichtete Vorsprung ferner einen zusätzlichen Halt für das Brandschutzmaterial, welches im aufgeblähten Zustand im Bereich der Öffnung des feuerfesten Rohres gehalten werden muss, um diese Öffnung abzuschotten.

In einer weiteren bevorzugten Ausführungsform sind die beiden Gehäuse-Halbschalen jeweils einstückig vorzugsweise aus einem Blechmaterial ausgebildet. Dadurch ist einerseits die Herstellung vereinfacht, da Blechmaterial ein einfach zu formendes und preiswertes Material ist, andererseits ist auch die Sicherheit weitergebildet, indem die Halbschalen jeweils einstückig sind. Dadurch sind keine zusätzlichen Schwachstellen in den Gehäuse-Halbschalen vorhanden.

Gemäß einer weiteren bevorzugten Ausführungsform weist der Stützabschnitt Befestigungsmittel zum Befestigen einer Brandschutzmanschette auf. Die Brandschutzmanschette weist vorzugsweise ein im Wesentlichen ringförmiges Gehäuse auf, an dessen Innenseite ein Brandschutzelement angeordnet ist. Eine derartige Brandschutzmanschette kann beispielsweise ausgebildet sein wie in DE 10 2008 031 018 A1 offenbart. Gemäß dieser Ausführungsform ist das Brandschutzelement demnach nicht innerhalb des Stützabschnitts angeordnet, sondern der Stützabschnitt ist dazu angepasst, dass an ihm eine Brandschutzmanschette befestigt wird und somit abgestützt wird. Dadurch ist weiter die Montage wesentlich vereinfacht. Brandschutzmanschetten, die gemäß dieser Ausführungsform eingesetzt werden können, sind hinlänglich bekannt und können ebenfalls eingesetzt werden, um Durchgangsöffnungen in Gebäudewandungen abzuschotten. Ein Monteur, der beispielsweise mit dem Brandschutz eines Gebäudes beauftragt ist, kann somit ein und dieselbe Brandschutzmanschette für verschiedene Anwendungsfälle nutzen. Einerseits kann er diese nutzen, um Durchgangsöffnungen in Gebäudewandungen abzuschotten, andererseits in Verbindung mit der Brandschutzvorrichtung, um eine Verbindungsstelle eines brennbaren und eines feuerfesten Rohres abzuschotten. Dadurch müssen weniger Variante an verschiedenen Brandschutzvorrichtungen vorgehalten werden, wodurch auch die Lagerkosten reduziert sind.

Dabei ist es bevorzugt, dass an dem Halteabschnitt mehrere biegbare Laschen angeordnet sind, die den Stützabschnitt bilden und mittels denen eine Brandschutzmanschette an diesem befestigbar ist. Dadurch ist die Montage weiter vereinfacht. Mittels der biegbaren Laschen ist der Stützabschnitt derart einstellbar, dass eine Brandschutzmanschette auf einfache Art und Weise an diesem montierbar ist. Dazu sind in den Laschen vorzugsweise Durchgangslöcher vorgesehen, durch die Schrauben anordenbar sind, um so die Brandschutzmanschette mit der Brandschutzvorrichtung fest zu verbinden.

Gemäß dieser Ausführungsform weist die Brandschutzmanschette ferner vorzugsweise ein Brandschutzelement und einen Mantel zum Halten des Brandschutzelements auf. Der Mantel ist vorzugsweise aus einem Blechmaterial gebildet, beispielsweise gestanzt. Auch dadurch ist die Montage weiter vereinfacht und die Kosten reduziert.

Weiterhin ist bevorzugt, dass das Gehäuse in dem Halteabschnitt einen Durchmesser aufweist, der in etwa einem Außendurchmesser eines abzuschottenden feuerfesten Rohres entspricht. Im Allgemeinen sind derartige feuerfeste Rohre, die in Gebäuden verlegt werden oder bereits verlegt sind, in verschiedenen gängigen Durchmessern vorhanden. Daher ist es bevorzugt, dass auch der Halteabschnitt an diese gängigen Durchmesser angepasst ist. Indem der innere Durchmesser des Halteabschnitts in etwa diesem Durchmesser des Rohres entspricht, ist die Montage weiter vereinfacht. Ein Spannen beispielsweise mittels einer Spanneinrichtung ist einfacher möglich und eine kraftschlüssige Verbindung zwischen dem Halteabschnitt und dem Rohr ist auf einfache Art und Weise herstellbar.

Gemäß der vorliegenden Erfindung wird die eingangs genannte Aufgabe mit den Mitteln des Anspruchs 1 gelöst, nämlich durch eine Brandschutzvorrichtung zum brandsicheren Abschotten einer Verbindung zwischen einem brennbaren und einem feuerfesten Rohr mit einer Brandschutzmanschette, die ein Brandschutzelement und einen Mantel zum Halten des Brandschutzelements aufweist, und mehreren Laschen, die dazu angepasst sind gemeinsam einen Haltabschnitt zum Befestigen der Brandschutzvorrichtung an dem feuerfesten Rohr zu bilden, wobei die Brandschutzvorrichtung angepasst ist, um eine Verbindungstelle eines brennbaren und eines feuerfesten Rohresund einen die Rohre verbindenden, dichtenden Rohr-Verbinder herum montiert zu werden. Die Brandschutzmanschette kann dabei als herkömmliche Brandschutzmanschette ausgebildet sein, wie etwa in DE 10 2008 031 018 A1 offenbart. Sie weist vorzugsweise ein im Wesentlichen ringförmiges Gehäuse auf, an dessen Innenseite ein Brandschutzelement angeordnet ist. Das Gehäuse ist vorzugsweise aus Blech gestanzt. Derartige Brandschutzmanschetten sind bekannt und können beispielsweise dazu eingesetzt werden, um Durchgangsöffnungen in Gebäudewandungen abzuschotten. Gemäß der Erfindung sind dabei vorzugsweise mehrere Laschen vorgesehen, die dazu angepasst sind, gemeinsam einen Haltabschnitt zum Befestigen der Brandschutzvorrichtung an einem feuerfesten Rohr zu bilden. Diese Laschen sind vorzugsweise mit dem Mantel der Brandschutzmanschette verbunden oder verbindbar.

Die erfindungsgemäße Brandschutzvorrichtung weist zusätzlich die Merkmalen einer oder mehrerer der vorstehend beschriebenen bevorzugten Ausführungsformen auf.

Gemäß dieser Ausführungsform bilden vorzugsweise der Mantel der Brandschutzmanschette und die Laschen gemeinsam das Gehäuse der Brandschutzvorrichtung. Dieses ist bevorzugt nicht aus zwei Gehäusehalbschalen gebildet, sondern der Mantel weist vorzugsweise eine Öffnungsstelle, sowie eine Schlitzung oder eine öffenbare Verstelleinrichtung auf, sodass die Brandschutzvorrichtung um eine Verbindungsstelle eines brennbaren und eines feuerfesten Roheres herum montierbar ist.

Die Laschen weisen dazu erfindungsgemäß einen Fußabschnitt mit einem umgebogenen Abschnitt zum Verbinden mit einer Schlauchschelle auf, mittels der die Brandschutzvorrichtung an dem feuerfesten Rohr befestigbar ist. Der umgebogene Abschnitt ist im Querschnitt vorzugsweise im Wesentlichen U-förmig. Erfindungsgemäß ist der umgebogene Abschnitt so ausgebildet, dass die Schlauchschelle in diesen Abschnitt einlegbar oder durch diesen hindurchführbar ist. Mittels der Schlauchschelle sind dann die einzelnen Fußabschnitte der Laschen gegen das feuerfeste Rohr verspannbar, sodass diese an diesem befestigt sind und so den Haltabschnitt für die Brandschutzvorrichtung bilden. Der Begriff Schlauchschelle umfasst hier jegliche Art von Schlauchschellen, Spannschellen, Spannringen, Rohrschellen und dergleichen. Dadurch ist die Montage wesentlich vereinfacht. Die gesamte Brandschutzvorrichtung ist aus konstruktiv einfachen und dem Verwender größtenteils bekannten Elementen zusammengesetzt, sodass die Montage intuitiv durchführbar ist. Die einzelnen Laschen werden dabei mittels der Schlauchschelle an dem feuerfesten Rohr verklemmt, sodass diese an diesem befestigt sind. Gegenüber der Schlauchschelle sind sie dabei vorzugsweise verschieblich. Dadurch ist die Brandschutzvorrichtung in einem breiten Einsatzspektrum einsetzbar. Sie ist nicht an vorgegebene Rohrdurchmesser gebunden. Für eine Brandschutzvorrichtung sind vorzugsweise zwei, vier oder mehr Laschen vorgesehen. So wird eine stabile Befestigung erreicht.

Gemäß einer bevorzugten Weiterbildung der Erfindung sind an dem Mantel der Brandschutzmanschette mehrerer Befestigungsarme angeformt, wobei die Laschen formschlüssig mittels einer Schnappverbindung mit den Befestigungsarmen verbindbar sind. Dadurch ist die Montage weiter vereinfacht. Üblicherweise weisen herkömmliche Brandschutzmanschetten solche Befestigungsarme auf. Diese Befestigungsarme weisen ferner eine Ausnehmung, insbesondere eine Bohrung auf, sodass die Brandschutzmanschetten an Gebäudewandlungen um Durchbrüche herum anschraubbar sind. Vorzugsweise weist daher die Lasche einen Formschlussabschnitt mit einer Rastnase zum Einrasten in diese insbesondere korrespondierende Ausnehmung an den Befestigungsarmen auf. So ist eine besonders einfache Verbindung möglich. Ferner sind herkömmliche Brandschutzmanschetten nutzbar, um Verbindungsstellen eines brennbaren und eines feuerfesten Rohres, die mittels eines dichten Rohrverbinders, wie unter dem Namen Konfix bekannt, verbunden sind, montiert zu werden. Dadurch ist die Flexibilität der Brandschutzvorrichtung weiter vergrößert. Es ist möglich herkömmliche Brandschutzmanschetten zu verwenden, wodurch zusätzlicher Lageraufwand vermieden wird. Alleine müssen die Laschen formschlüssig mit den Befestigungsarmen der Brandschutzmanschetten verbunden werden und dann sind die Laschen mittels der Schlauchschelle an dem feuerfesten Rohr zu befestigen, um dieses brandsicher abzuschotten.

In einer alternativen Weiterbildung der Erfindung sind die Laschen einstückig an dem Mantel der Brandschutzmanschette und/oder an den Befestigungsarmen angeformt. Dadurch ist die Montage weiter vereinfacht. Es ist lediglich erforderlich die Schlauchschelle an den Fußabschnitten der Laschen anzuordnen und so die Laschen, und damit auch die Brandschutzmanschette, an dem feuerfesten Rohr zu befestigen.

In einem weiteren Aspekt der Erfindung wird die eingangs genannte Aufgabe bei einer Verwendung der eingangs genannten Art, nämlich einer Verwendung einer Brandschutzvorrichtung für die brandsichere Abschottung einer Verbindung zwischen einem brennbaren und einem feuerfesten Rohr gelöst, indem die Brandschutzvorrichtung um eine Verbindungsstelle eines brennbaren und eines feuerfesten Rohres, die mittels eines dichtenden Rohrverbinders, insbesondere Konfix-Verbinders, verbunden sind, montiert ist, wobei die Brandschutzvorrichtung vorzugsweise nach einer der vorstehend beschriebenen bevorzugten Ausführungsformen einer Brandschutzvorrichtung ausgebildet ist. Es soll verstanden werden, dass die Verwendung einer Brandschutzvorrichtung sowie die Brandschutzvorrichtung an sich eine Vielzahl von gemeinsamen ähnlichen bevorzugten Ausführungsformen aufweisen, die insbesondere in den Unteransprüchen weiter definiert sind. Insofern wird für die Vorteile auf die bevorzugten Ausführungsformen zu einer oben beschriebenen Brandschutzvorrichtung verwiesen.

Im Folgenden ist die Erfindung anhand eines Ausführungsbeispieles unter Bezug auf die beiliegenden Figuren 11 bis 17 näher erläutert. Es zeigen:
- Figur 1: eine perspektivische Ansicht einer um eine Verbindungsstelle zwischen einem brennbaren und einem feuerfesten Rohr montierten Brandschutzvorrichtung;
- Figur 2: einen Teilschnitt durch die Brandschutzvorrichtung, montiert wie in Figur 1;
- Figur 3: einen Vollschnitt durch die Brandschutzvorrichtung, montiert wie in den Figuren 1 und 2;
- Figur 4: eine perspektivische Ansicht einer Brandschutzvorrichtung gemäß einer zweiten beispielhaften Ausführung;
- Figur 5: eine Seitenansicht einer Brandschutzvorrichtung gemäß einem weiteren Ausführungsbeispiel;
- Figur 6: eine perspektivische Ansicht mit einer teilweise aufgebrochenen Brandschutzvorrichtung gemäß Figur 5;
- Figur 7: eine perspektivische Ansicht einer Brandschutzvorrichtung gemäß einem weiteren Ausführungsbeispiel;
- Figur 8: die Brandschutzvorrichtung aus Figur 7 im montierten Zustand;
- Figur 9: eine Seitenansicht der montierten Brandschutzvorrichtung aus Figur 8;
- Figur 10: eine Draufsicht auf die montiert Brandschutzvorrichtung aus Figur 8;
- Figur 11: eine perspektivische Ansicht einer Brandschutzvorrichtung gemäß der Erfindung;
- Figur 12: eine perspektivische Ansicht der erfindungsgemäßen Brandschutzvorrichtung aus Figur 11;
- Figur 13: eine weitere perspektivische Ansicht der Brandschutzvorrichtung aus den Figur 11 und 12 mit einer Schlauchschelle;
- Figur 14: eine perspektivische Ansicht einer Lasche für eine erfindungsgemäße Brandschutzvorrichtung gemäß einem weiteren Ausführungsbeispiel;
- Figur 15: eine perspektivische Ansicht der Lasche aus Figur 14 mit einem teilweise ausgebrochenen Abschnitt eines Mantels einer Brandschutzmanschette;
- Figur 16: die Lasche und den Manschettenmantel aus Figur 15 in einem Zustand während einer Montage; und
- Figur 17: die Lasche und der Manschettenmantel aus den Figur 15 und 16 im montierten Zustand.

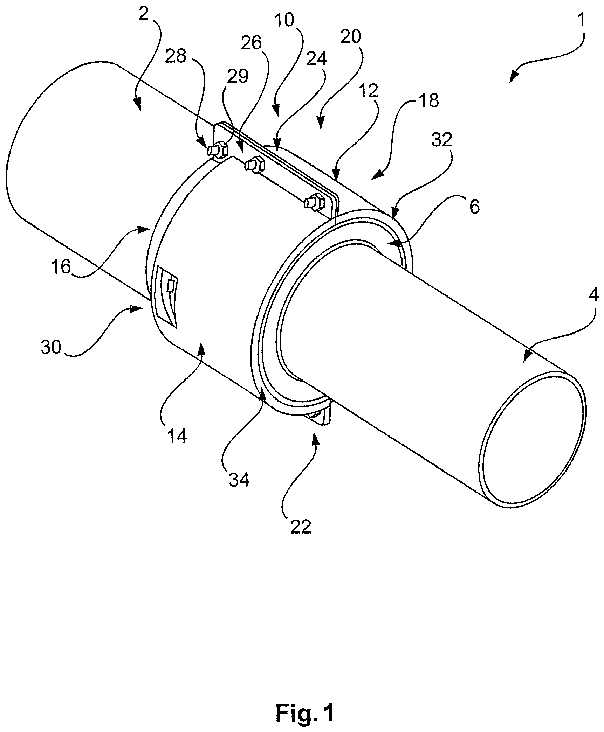

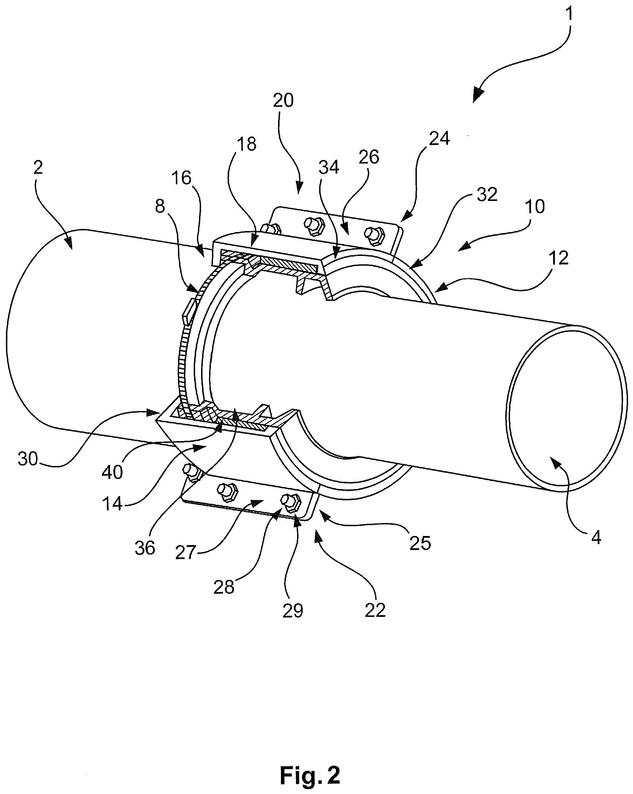

Gemäß Figur 1 ist eine Brandschutzvorrichtung 1 bestimmungsgemäß um eine Verbindungsstelle zwischen einem feuerfesten SML-Rohr 2 und einem brennbaren Rohr 4, die mittels eines Konfix-Verbinders 6 verbunden sind, angeordnet. Die Brandschutzvorrichtung 1 weist ein Gehäuse 10 auf, welches gemäß diesem Ausführungsbeispiel aus zwei im Wesentlichen symmetrisch ausgebildeten Gehäuse-Halbschalen 12, 14 besteht. Das Gehäuse 10 weist ferner einen Halteabschnitt 16 und einen Stützabschnitt 18 auf. Der Halteabschnitt 16 liegt gemäß diesem Ausführungsbeispiel im Wesentlichen an der äußeren Umfangsfläche des SML-Rohrs 2 an und ist an diesem kraftschlüssig geklemmt. Der Stützabschnitt 18 nimmt, bezogen auf die axiale Länge des Gehäuses 10, den weitaus größeren Teil des Gehäuses ein als der Halteabschnitt 16. Der Stützabschnitt 18 erstreckt sich im Wesentlichen über die gesamte axiale Länge des Rohrverbinders 6, der mittels einer Rohrschelle 8 ebenfalls an dem SML-Rohr 2 befestigt ist (Figur 2).

Die beiden Gehäuse-Halbschalen 12, 14 sind gemäß diesem Ausführungsbeispiel mittels zweier Spanneinrichtungen 20, 22 gegeneinander und gegen das SML-Rohr 2 verspannt. Jede Gehäuse-Halbschale 12, 14 weist dazu jeweils an beiden radialen Enden eine Verbindungslasche 24, 25, 26, 27 auf, die sich von den jeweiligen Gehäuse-Halbschalen 12, 14 radial wegerstrecken. Die Verbindungslaschen 24, 25 dieser Gehäuse-Halbschale 12 sind korrespondierend zu den Verbindungslaschen 26, 27 der Gehäuse-Halbschale 14 ausgebildet, so dass diese im montierten Zustand (wie in den Figuren 1 bis 3 dargestellt) im Wesentlichen aneinander anliegen. Zum Verspannen sind jeweils drei Durchgangslöcher in jede Lasche 24, 25, 26, 27 eingebracht, die ebenfalls korrespondierend zueinander sind. Durch diese Durchgangslöcher sind Schrauben 28 geführt und mit einer Mutter 29 arretiert (in den Figur ist jeweils nur eine Schraube und eine Mutter mit Bezugszeichen versehen).

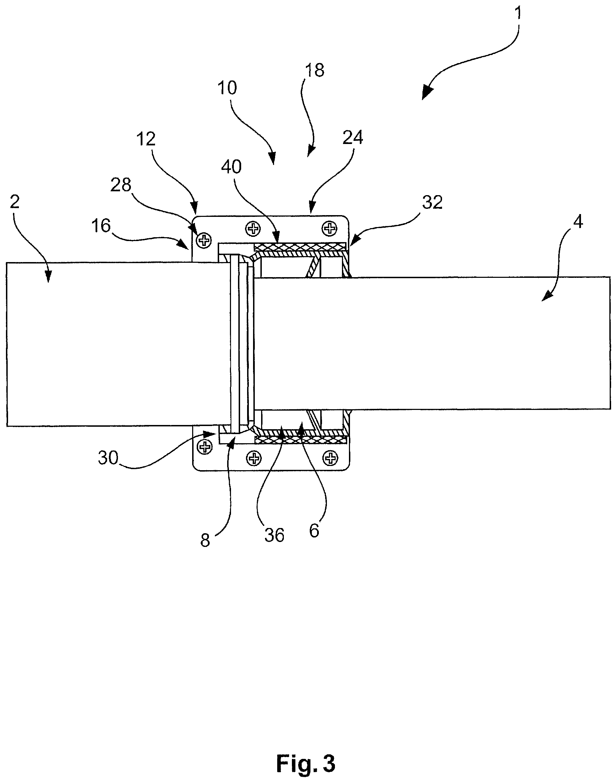

Der axial benachbart zu dem Stützabschnitt 18 angeordnete Halteabschnitt 16 geht stufenförmig über eine Stufe 30 in dem Gehäuse 10 in diesen über. Dadurch weist der Stützabschnitt 18 einen größeren Durchmesser als der Halteabschnitt 16 auf. Die Stufe 30 ist hier als im Wesentlichen sich radial erstreckender Abschnitt ausgebildet. An dem dem Halteabschnitt 16 gegenüberliegenden Ende des Gehäuses 10 ist jeweils an jeder Gehäuse-Halbschale 12, 24 ein sich radial nach innen erstreckender Vorsprung 32, 34 ausgebildet. Dieser Vorsprung 32, 34 ist im Wesentlichen ringförmig bzw. halbringförmig ausgebildet. Durch das Zusammenspiel der Stufe 30 und der Vorsprünge 32, 34 ist im Inneren des Gehäuses 10 eine im Wesentlichen ringförmige Kavität 36 ausgebildet. In dieser Kavität 36 ist anliegend an dem Gehäuse 10 ein Brandschutzelement 40 vorgesehen. Das Brandschutzelement 40 ist flächig und streifenförmig an der Innenseite des Stützabschnitts 18 an dem Gehäuse 10 befestigt. Gemäß diesem Ausführungsbeispiel liegt das Brandschutzelement 40 auch an dem Konfix-Verbinder 6 an (siehe Figur 3), dies ist jedoch nicht zwingend erforderlich. Wie insbesondere aus Figur 3 ersichtlich, erstreckt sich das Brandschutzelement 40 in axialer Richtung nicht über den kompletten Halteabschnitt 18, sondern nur bis etwa zum Beginn des SML-Rohres 2. Dies ist besonders vorteilhaft, da im Brandfall in diesem Bereich abgeschottet werden muss. Im Brandfall würde zunächst das brennbare Rohr 4 erweichen oder gar schmelzen, so dass es eventuell aus der Brandschutzvorrichtung 1 herausfällt. Auch der Konfix-Verbinder 6 würde erweichen. Das Brandschutzelement 40 würde dann infolge der Erwärmung beginnen aufzublähen und dabei den erweichten Konfix-Verbinder 6 sowie das erweichte brennbare Rohr 4 zusammendrücken. Das SML-Rohr 2 wäre folglich verschlossen und heißes Rauchgas kann nicht mehr ins Innere des SML-Rohres 2 eindringen und ein Brand ist abgeschottet. Gegen axiales Herausfallen des aufgeblähten Brandschutzelements 40 sichern die nach innen ragenden Vorsprünge 32, 34 sowie die Stufe 30 und der Halteabschnitt 16 des Gehäuses 10.

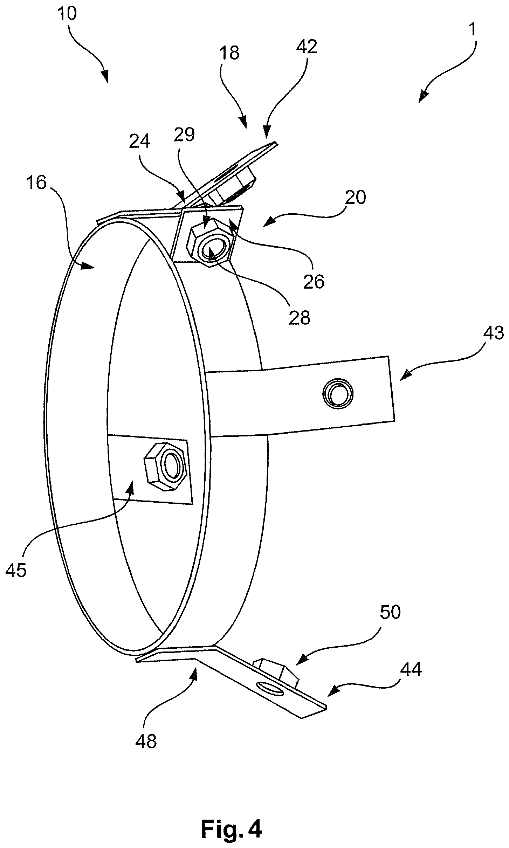

In Figur 4 ist ein zweites Ausführungsbeispiel der Brandschutzvorrichtung 1 illustriert. Gleiche und ähnliche Elemente sind mit gleichen Bezugszeichen versehen. Insofern wird vollumfänglich auf die obige Beschreibung zu den Figuren 1 bis 3 Bezug genommen.

Gemäß diesem Ausführungsbeispiel weist die Brandschutzvorrichtung 1 ein Gehäuse 10 auf, das wiederum aus einem Halteabschnitt 16 und einem Stützabschnitt 18 besteht. Der Halteabschnitt 16 ist gemäß diesem Ausführungsbeispiel im Wesentlichen ringförmig ausgebildet. Er weist vorzugsweise einen Durchmesser auf, der im Wesentlichen einen Durchmesser eines SML-Rohrs (in Figur 4 nicht gezeigt; vgl. Figuren 1 bis 3) entspricht. An dem Halteabschnitt 16 ist eine Spanneinrichtung 20 angeordnet. Die Spanneinrichtung besteht aus zwei Verbindungslaschen 24, 26, die an zwei radialen Enden des Halteabschnitts 16 sich radial erstreckend angeordnet sind. An beiden Verbindungslaschen 24, 26 ist eine korrespondierende Durchgangsöffnung ausgebildet, durch die eine Schraube 28 anordenbar ist, die mit einer Mutter 29 zum Spannen der Spanneinrichtung 20 zusammenwirkt. An dieser Stelle ist das Gehäuse 10 an dem Halteabschnitt 16 auch öffnenbar und so die Brandschutzvorrichtung 1 nachträglich über eine Verbindungsstelle zwischen einem SML-Rohr 2 und einem brennbaren Rohr 4 montierbar.

Der Stützabschnitt 18 des Gehäuses 10 besteht gemäß diesem Ausführungsbeispiel aus vier biegbaren Laschen 42, 43, 44, 45, die fest mit dem Halteabschnitt 16 verbunden sind. Die biegbaren Laschen 42, 43, 44, 45 erstrecken sich, wie in Figur 4 illustriert, in schräger Konfiguration von dem Halteabschnitt 16 weg, sind jedoch biegbar und weisen dazu, wie insbesondere bei der Lasche 44 ersichtlich einen biegbaren Abschnitt 48 (nur einer mit Bezugszeichen versehen) auf.

Diese Laschen 42, 43, 44, 45 sind jeweils mit einem Durchgangsloch und einer im Wesentlichen koaxial zum Durchgangsloch angeordneten Mutter 50 (in Figur 4 nur eine mit Bezugszeichen versehen) ausgestattet. So ist eine Brandschutzmanschette, wie beispielsweise in DE 10 2008 031 018 A1 offenbart, an dem Stützabschnitt 18 befestigbar. Im montierten Zustand sind die Laschen 42, 43, 44, 45 vorzugsweise so gebogen, dass sie sich im Wesentlichen radial von dem Halteabschnitt 16 erstrecken.

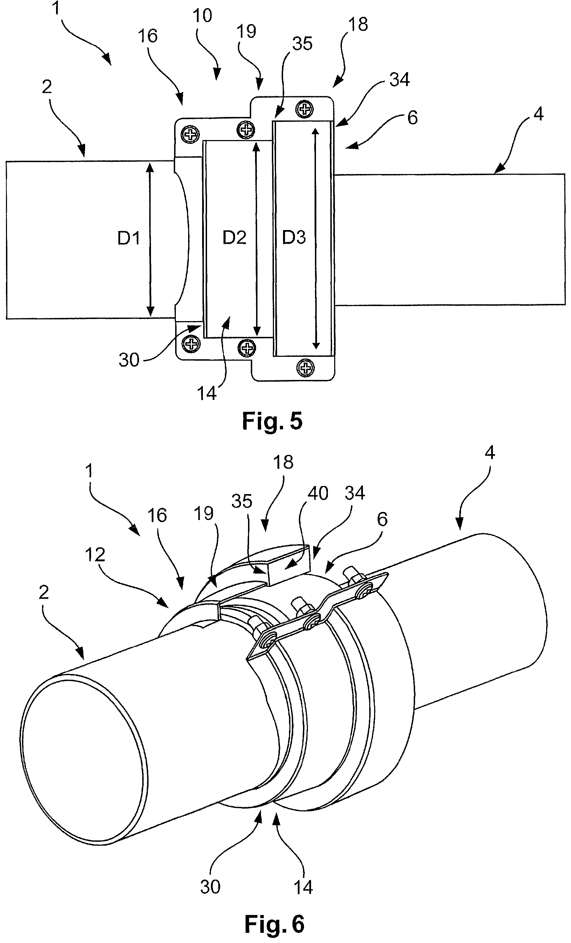

Figur 5 zeigt eine Brandschutzvorrichtung 1 gemäß einem weiteren Ausführungsbeispiel, bestimmungsgemäß um eine Verbindungsstelle zwischen einem feuerfesten SML-Rohr 2 und einem brennbaren Rohr 4, die mittels eines Konfix-Verbinder 6 verbunden sind, angeordnet. Die in Figur 5 und 6 gezeigte Ausführungsform weist viele Ähnlichkeiten mit den in den Figuren 1 bis 3 gezeigten Ausführungsformen auf; ähnliche und gleiche Elemente sind mit gleichen Bezugszeichen versehen. Insofern wird vollumfänglich auf die obige Beschreibung zu den Figuren 1 bis 3 Bezug genommen.

Die Brandschutzvorrichtung 1 weist ein Gehäuse 10 auf, welches gemäß diesem Ausführungsbeispiel aus 2 im Wesentlichen symmetrisch ausgebildeten Gehäuse-Halbschalen 12, 14 besteht. Das Gehäuse 10 weist ferner einen Halteabschnitt 16 und einen Stützabschnitt 18 auf.

Der zum Stützabschnitt 18 axial benachbart angeordnete Halteabschnitt 16 geht im Unterschied zu dem ersten Ausführungsbeispiel (siehe Figur 1 bis 3) stufenförmig über eine Stufe 30 in dem Gehäuse 10 zunächst in einen Zwischenabschnitt 19 über, der dann über eine weitere Stufe 35 in den Stützabschnitt 18 übergeht. Die Stufen 30, 35 sind hier als im Wesentlichen sich radial erstreckende Abschnitte ausgebildet. Dadurch weist das Gehäuse 10 drei verschiedene Abschnitte 16, 18, 19 auf, die jeweils einen unterschiedlichen Durchmesser D1, D2, D3 aufweisen. Der Durchmesser D1 des Halteabschnitts 16 entspricht im Wesentlichen dem Außendurchmesser des SML-Rohres 2, so dass das Gehäuse 10 gegen das SML-Rohr 2 klemmbar ist. Der Durchmesser D2 ist so gewählt, dass sich der Zwischenabschnitt 19 über den Konfix 6 herüber erstreckt. Durchmesser D3 des Stützabschnitts 18 ist hingegen so gewählt, dass in diesem an einer Gehäuseinnenseite ein Brandschutzelement 40 aufnehmbar ist. Das Brandschutzelement 40 erstreckt sich zwischen dem die Stufe bildenden radialen Abschnitt 35 und einem nach innen gestreckten, radialen Abschnitt 34. Dadurch ist das Brandschutzelement 40, welches im Wesentlichen ringförmig ausgebildet ist, von zwei axialen Seiten sowie von einer radialen Seite gestützt und expandiert im Brandfall so im Wesentlichen radial nach innen, um den Konfix 6 und das brennbare Rohr 4 zusammenzudrücken, und so den Durchgang durch das SML-Rohr 2 hindurch abzuschotten. Diese Konfiguration der Brandschutzvorrichtung 1 mit dem Zwischenabschnitt 19 bietet demnach eine verbesserte Stützung des Brandschutzelements 40. Das Brandschutzelement 40 ist vorzugsweise als Formteil ausgebildet. Alternativ kann es auch als Brandschutzwickelband ausgebildet sein und beispielsweise mehrlagig gewickelt sein.

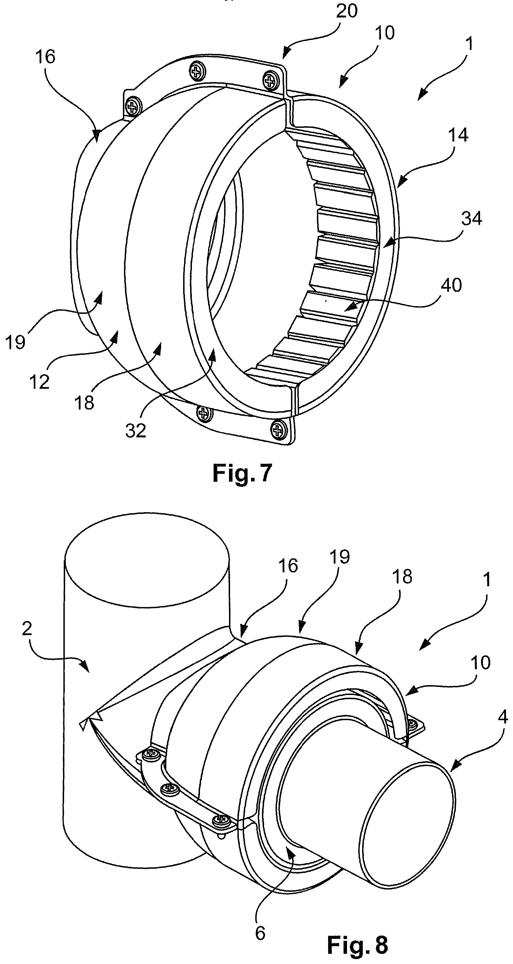

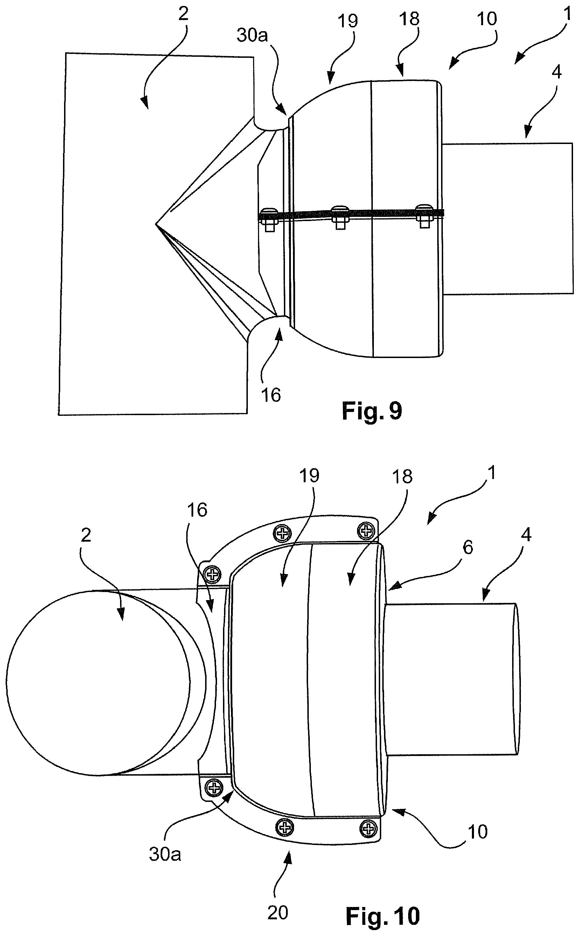

Das in den Figuren 7 bis 10 gezeigte Ausführungsbeispiel der Brandschutzvorrichtung 1 ähnelt wiederum den in Figuren 1 bis 3 und 5 bis 6 gezeigten Ausführungsbeispielen, so dass im Folgenden auf die Unterschiede eingegangen wird. Gleiche und ähnliche Elemente sind mit gleichen Bezugszeichen versehen. Insofern wird vollumfänglich auf die obigen Beschreibungen Bezug genommen.

Im Unterschied zu den ersten beiden Ausführungsbeispielen (Figuren 1 bis 3 und 5 bis 6) weist die Brandschutzvorrichtung 1 gemäß den Figuren 7 bis 10 keine Stufen in dem Gehäuse 10 auf. Das Gehäuse 10 weist wiederum zwei Halbschalen 12, 14 (siehe Figur 7) auf, die mittels einer Spanneinrichtung 20 miteinander verspannbar sind. Das Gehäuse 10 weist einen Halteabschnitt 16, einen Stützabschnitt 18 und einen Zwischenabschnitt 19, der den Halteabschnitt 16 und den Stützabschnitt 18 miteinander verbindet, auf. Alle drei Abschnitte 16, 18, 19 gehen stufenlos ineinander über. Der Absatz 30a zwischen dem Halteabschnitt 16 und dem Zwischenabschnitt 19 ist ebenfalls mittels Rundungen ausgebildet. In alternativen Ausführungsbeispielen ist der Absatz 30a als Stufe ausgebildet. Dies ist je nach Einbausituation vorteilhaft und führt zu einem platzsparenden Einbau.

Der Zwischenabschnitt 19 ist gekrümmt ausgebildet. Der Zwischenabschnitt 19 geht bevorzugt in einer konvex gekrümmten Form, insbesondere bogenförmig von dem Stützabschnitt 18 mit dem größten Innendurchmesser in den Übergang 30a zum Stützabschnitt über. Der Zwischenabschnitt ist bevorzugt teilkugel- oder teilellipsoidförmig. Das Brandschutzelement 40 (siehe Figur 7) ist in dem Stützabschnitt 18 an der Innenseite des Gehäuses 10 angelegt. Indem das Gehäuse 10 keine Absätze oder Stufen aufweist, ist die Krafteinleitung von dem Stützabschnitt 16 bis in den Halteabschnitt 16 und in das feuerfeste SML-Rohr 2 besonders spannungsarm möglich. Das Gehäuse 10 weist keine scharfkantigen Übergänge auf, die im Brandfall zu Bruch- oder Rissstellen werden können, auf. Dadurch ist die Sicherheit der Brandschutzvorrichtung weiter verbessert.

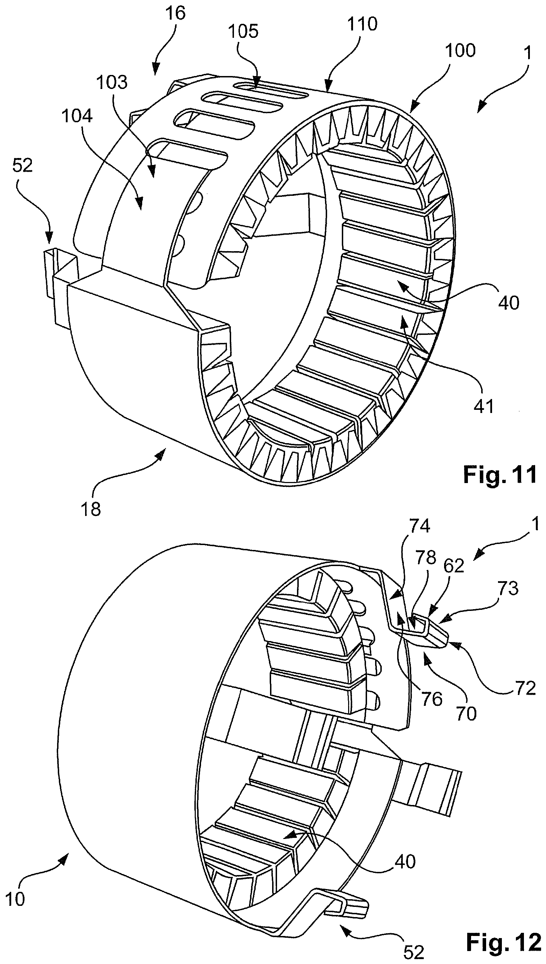

Gemäß einem Ausführungsbeispiel (Figuren 11 bis 13) der Erfindung weist die Brandschutzvorrichtung 1 zum brandsichereren Abschotten einer Verbindung zwischen einem brennbaren und einem feuerfesten Rohr eine Brandschutzmanschette 100, die ein Brandschutzelement 40 und einen Mantel 110 zum Halten des Brandschutzelements aufweist, auf. Die Brandschutzmanschette 100 ist vorzugsweise nach einer herkömmlichen Brandschutzmanschette gebildet. Der Mantel 110 weist eine Verstelleinrichtung 104 auf, die einen Haken 103 umfasst, der an einem Ende des bandförmigen Mantels 110 angeordnet ist und einer Mehrzahl an Öffnungen 105, die an einem anderen Ende des bandförmigen Mantels 110 ausgebildet sind. Der Haken 103 kann in verschiedene Öffnungen 105 eingehakt werden, so dass sich der Durchmesser der Brandschutzmanschette 100 verändert. Dies ist insbesondere aus Figur 11 leicht ersichtlich. Das Brandschutzelement 40 ist segmentiert in eine Vielzahl von axial angeordneten einzelnen Barren 41. Durch diese Gestaltung lassen sich einzelne Barren 41 abtrennen, wenn die Manschette 100 mittels der Verstelleinrichtung 104 im Durchmesser verkleinert wird.

An dem Mantel 110 der Brandschutzmanschette 100 sind vier Laschen 52 angeformt. Die Laschen 52 erstrecken sich zunächst axial von dem Mantel 110 weg und erstrecken sich dann in der Richtung einer Längsachse der Brandschutzvorrichtung 1. Während der Mantel 110 den Stützabschnitt 18 der Brandschutzvorrichtung 1 bildet, bilden die Laschen 52 den Halteabschnitt 16.

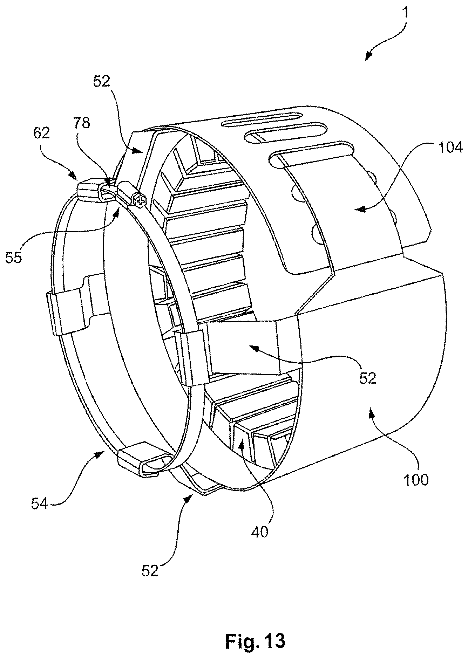

Die Laschen 52 weisen einen Fußabschnitt 62 zum In-Kontakt-Kommen mit dem feuerfesten Rohr auf (siehe insbesondere Figur 12 und 13). Der Fußabschnitt 62 weist einen umgebogenen Abschnitt 70, 72, 73 auf, durch den eine Schlauchschelle 54 hindurchführbar ist. Der umgebogene Abschnitt weist zunächst einen flächigen Kontaktabschnitt 70 auf, der im Wesentlichen axial ausgerichtet ist und im montierten Zustand an dem feuerfesten Rohr (in den Figuren 11 bis 13 gezeigt) anliegt. Von diesem Kontaktabschnitt 70 erstreckt sich ein kurzer Abschnitt 72 radial auswärts, um sich dann axial zurück zu erstrecken (Abschnitt 73). Durch diese Konfiguration weist der umgebogene Abschnitt 70, 72, 73 im Wesentlichen einen U-förmigen Querschnitt auf und bildet eine Kavität 78.

Zwischen dem Fußabschnitt 62 und dem Mantel 110 erstreckt sich ein schräger Abschnitt 74. Zwischen dem schrägen Abschnitt 74 und dem sich zurückerstreckenden Abschnitt 73 ist eine kleine Lücke 76, durch die die Schlauchschelle 54 in die Kavität 78 einlegbar ist (siehe beispielsweise Figur 13). Die Länge des Kontaktabschnitts 70 zwischen dem schrägen Abschnitt 74 und dem kurzen Abschnitt 72 ist so gewählt, dass auf der Innenseite der Kavität 78 die Schlauchschelle 54 flächig aufliegen kann.

Die Schlauchschelle 54 weist eine Spanneinrichtung 55 auf, mittels der der Durchmesser der Schlauchschelle 54 verkleiner- oder vergrößerbar ist. Die Schlauchschelle 54 wird durch alle Fußabschnitte, bzw. alle Kavitäten 78 der Laschen 52, welche an dem Mantel 110 angeformt sind, hindurchgeführt. Durch ein Verspannen der Schlauchschelle 54 werden die Fußabschnitte 62 der Laschen 52 gegen das feuerfeste Rohr verspannt und die Brandschutzvorrichtung 1 so an diesem montiert. Damit ist die Brandschutzvorrichtung so montierbar, dass sich der Stützabschnitt 18 mit dem Brandschutzelement 40 über den dichtenden Verbinder (Konfix) und teilweise über das brennbare Rohr erstrecken.

Diese Brandschutzvorrichtung 1 ist besonders einfach montierbar. Brandschutzmanschetten 100 an sich sind dem Monteur bekannt und dieser weiß wie diese zu montieren sind. Ferner sind Schlauchschellen, wie die Schlauchschelle 54, ebenfalls einem Monteuren bekannt. Die Brandschutzvorrichtung 1 ist dadurch intuitiv montierbar. Zum Montieren um eine bestehende Verbindung eines brennbaren oder eines nicht brennbaren Rohres herum ist die Manschette 100 lediglich vor Montage an der Spanneinrichtung 103 zu öffnen und dann um die Verbindungsstelle der beiden Rohre herum anzuordnen.

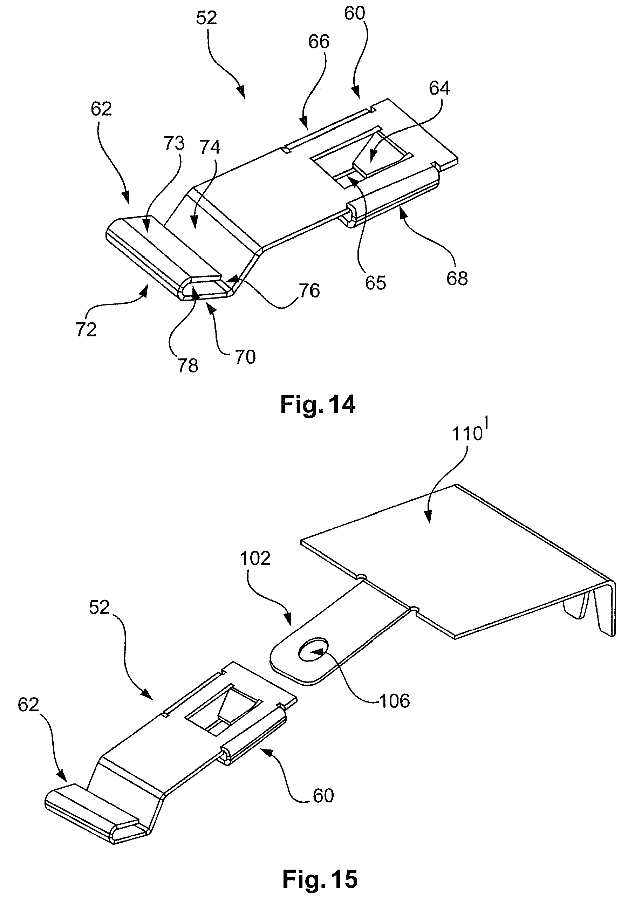

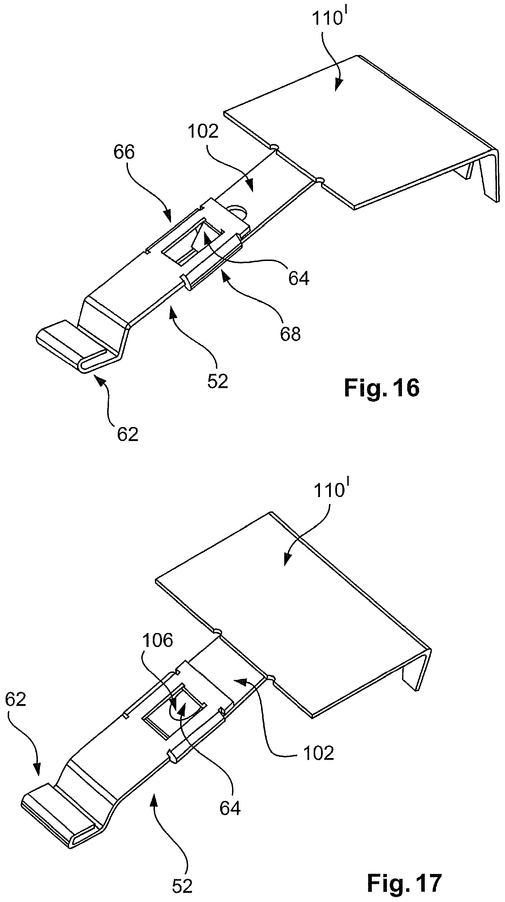

Die Figuren 14 bis 17 betreffen ein weiteres Ausführungsbeispiel einer Lasche 52 für eine erfindungsgemäße Brandschutzvorrichtung 1, welches eine Anzahl an Gemeinsamkeiten mit dem Ausführungsbeispiel gemäß den Figuren 11 bis 13 aufweist. Gleiche und ähnliche Elemente sind daher mit gleichen Bezugszeichen versehen.

Im Unterschied zu dem Ausführungsbeispiel gemäß den Figuren 11 bis 13 sind die Laschen 52 gemäß diesem Ausführungsbeispiel (Figur 14 bis 17) nicht an den Mantel 110 der Brandschutzmanschette 100 angeformt. Vielmehr ist die Brandschutzmanschette 100 als herkömmliche Brandschutzmanschette ausgebildet und weist eine Mehrzahl an Befestigungsarmen 102 auf, die wiederum biegbar an dem Mantel 110 angeformt sind. In den Figuren 15 bis 17 ist jeweils nur ein Abschnitt des Mantels 110 als Mantelabschnitt 110' dargestellt. Die Befestigungsarme 102 weisen eine Bohrung 106 auf. Üblicherweise werden die Befestigungsarme 102 dazu eingesetzt, die Brandschutzmanschette 100 an einer Wand oder Decke anzuschrauben.

Die Laschen 52 weisen gemäß diesem Ausführungsbeispiel einen Fußabschnitt 62 auf, der im Wesentlichen gemäß dem Fußabschnitt 62 aus dem Ausführungsbeispiel der Figuren 11 bis 13 ausgebildet ist. Ferner weisen die Laschen 52 als Kopplungsabschnitt einen Formschlussabschnitt 60 auf zum formschlüssigen Verbinden mit den Befestigungsarmen 102 des Mantels 110.

Der Formschlussabschnitt 60 der Lasche 52 erstreckt sich abgeschrägt von dem schrägen Abschnitt 74 der Lasche 52 von dem Fußabschnitt 62 weg. Der Formschlussabschnitt 60 weist eine zentrale Ausnehmung 65 auf, aus der sich eine Rastnase 64 hervor erstreckt. Die Rastnase 64 oder Zunge 64 erstreckt sich von einem Rand der zentralen Ausnehmung 65 in Richtung des Fußabschnittes 62 und läuft leicht trapezförmig zu. An seitlichen Enden der Lasche 52 im Bereich der zentralen Ausnehmung 65 sind zwei Führungen 66, 68 ausgebildet, die als umgebogene Blechabschnitte ausgebildet sind. Diese Führungen 66, 68 dienen zum Führen des Befestigungsarms 102. Bei einer Montage werden die Laschen 52 auf die Befestigungsarme 102 aufgesteckt. Dazu ist die Lasche 52 mit dem Formschlussabschnitt 60 so über den Befestigungsarm 102 zu führen, dass dieser von den Führungen 66, 68 geführt wird. Die Lasche 52 ist dann so weit auf die Befestigungsarme 102 aufzustecken, bis die Rastnase 64 in die Bohrung 106 einrastet. Indem die Rastnase 64 leicht trapezförmig zuläuft, greift diese durch die Bohrung 106 hindurch und ein Abziehen der Lasche 52 von dem Befestigungsarm 102 ist verhindert. Es ist für das Wesen der Erfindung nicht zwingend erforderlich, dass die Rastnase 64 trapezförmig ist. Die Rastnase ist in anderen bevorzugten Ausführungsformen, dreieckig, rechteckig oder bogenförmig gebildet. Vorzugsweise ist die Breite der Rastnase 64 derart gewählt, dass diese in die Bohrung 106 eingreifen kann, also die Breite kleiner als der Durchmesser der Bohrung 106 ist. Durch das Eingreifen der Rastnase 64 in die Bohrung 106 ist eine sichere formflüssige Verbindung zwischen der Lasche 52 und dem Mantel 110 der Brandschutzmanschette 100 hergestellt. Das Aufstecken der Lasche 52 auf den Verbindungsarm 102 ist leicht aus den Figuren 15, 16 und 17 ersichtlich. Sind die Laschen 52 so formschlüssig mit dem Mantel 110 der Brandschutzmanschette 100 verbunden, kann wiederum eine Schlauchschelle 54 in die durch den umgebogenen Abschnitt 70, 72, 73 gebildete Kavität 78 eingelegt werden und die Brandschutzvorrichtung 1 kann um eine Verbindungsstelle zwischen einem brennbaren und einem nicht brennbaren Rohr herum montiert werden. Die Laschen 52 eignen sich insbesondere dazu, als Adapter benutzt zu werden, um herkömmliche Brandschutzmanschetten 100 um Konfix-Verbindungsstellen zwischen einem brennbaren und einem nicht brennbaren Rohr herum zu montieren bzw. nachzurüsten.

## Patentansprüche

1. Brandschutzvorrichtung (1) zum brandsicheren Abschotten einer Verbindung zwischen einem brennbaren (4) und einem feuerfesten (2) Rohr, mit
einer Brandschutzmanschette (100), die ein Brandschutzelement (40) und einen Mantel (110) zum Halten des Brandschutzelements (40) aufweist,
mehreren Laschen (52), die dazu angepasst sind gemeinsam einen Halteabschnitt (16) zum Befestigen der Brandschutzvorrichtung (1) an dem feuerfesten Rohr zu bilden,
wobei die Brandschutzvorrichtung (1) dazu angepasst ist, um eine Verbindungsstelle eines brennbaren (4) und eines feuerfesten (2) Rohres und einen die Rohre verbindenden, dichtenden Rohr-Verbinder (6) herum montiert zu werden,
**dadurch gekennzeichnet, dass** die Laschen (52) einen Fußabschnitt (62) mit einem umgebogenen Abschnitt (70) zum Aufnehmen einer Schlauchschelle (54) aufweisen, mittels der die Brandschutzvorrichtung (1) an dem feuerfesten Rohr (2) befestigbar ist,
wobei der umgebogene Abschnitt so ausgebildet ist, dass die Schlauchschelle in diesen Abschnitt einlegbar oder hindurchführbar ist.

2. Brandschutzvorrichtung nach Anspruch 1,
**dadurch gekennzeichnet, dass** die Laschen (52) einstückig an dem Mantel (110) der Brandschutzmanschette (100) angeformt sind.

3. Brandschutzvorrichtung (1) nach Anspruch 1,
**dadurch gekennzeichnet, dass** an dem Mantel (110) mehrere Befestigungsarme (102) angeformt sind, wobei die Laschen (52) formschlüssig mittels einer Schnappverbindung mit den Befestigungsarmen (102) verbindbar sind.

4. Brandschutzvorrichtung nach Anspruch 3,
**dadurch gekennzeichnet, dass** die Laschen (52) einen Formschlussabschnitt (60) mit einer Rastnase (64) zum Einrasten in eine Ausnehmung (106) an den Befestigungsarmen (102) aufweisen.

5. Brandschutzvorrichtung nach einem der vorstehenden Ansprüche,
**dadurch gekennzeichnet, dass** sich die Brandschutzmanschette (100) im Wesentlichen über die gesamte axiale Länge des Rohrverbinders (6) erstreckt.

6. Brandschutzvorrichtung nach einem der vorstehenden Ansprüche,
**dadurch gekennzeichnet, dass** zwei, vier oder mehr Laschen (52) vorgesehen sind.

7. Brandschutzvorrichtung nach Anspruch 4,
wobei an seitlichen Enden der Lasche (52) im Bereich einer zentralen Ausnehmung (65) zwei Führungen (66, 68) zum Führen des Befestigungsarms (102) ausgebildet sind, die als umgebogene Blechabschnitte ausgebildet sind.

8. Brandschutzvorrichtung nach einem der vorstehenden Ansprüche,
**dadurch gekennzeichnet, dass** der umgebogene Abschnitt (70-73) der Lasche (52) im Querschnitt im Wesentlichen U-förmig ist.

9. Brandschutzvorrichtung nach einem der Ansprüche 3 bis 8,
**dadurch gekennzeichnet, dass** sich der Formschlussabschnitt (60) der Lasche (52) abgeschrägt von einem schrägen Abschnitt (74) der Lasche (52) von dem Fußabschnitt (62) weg erstreckt.

10. Brandschutzvorrichtung nach einem der Ansprüche 4 bis 9,
**dadurch gekennzeichnet, dass** der Formschlussabschnitt (60) eine zentrale Ausnehmung (65) aufweist, aus der sich eine Rastnase (64) hervor erstreckt, wobei sich die Rastnase (64) von einem Rand der zentralen Ausnehmung (65) in Richtung des Fußabschnittes (62) erstreckt und leicht trapezförmig zuläuft.

11. Verwendung einer Brandschutzvorrichtung (1) zum brandsicheren Abschotten einer Verbindung zwischen einem brennbaren (4) und einem feuerfesten (2) Rohr,
wobei die Brandschutzvorrichtung (1) nach einem der vorstehenden Ansprüche 1 bis 10 ausgebildet ist und
wobei die Brandschutzvorrichtung (1) um eine Verbindungsstelle eines brennbaren (4) und eines feuerfesten (2) Rohres und einen die Rohre verbindenden, dichtenden Rohr-Verbinder (6) herum montiert wird.

12. Brandschutzsystem zum brandsicheren Abschotten einer Verbindung zwischen einem brennbaren (4) und einem feuerfesten (2) Rohr, mit
dem brennbaren Rohr (4),
dem feuerfesten Rohr (2),
einem die Rohre in sich aufnehmenden dichtenden Rohrverbinder (6), und
einer Brandschutzvorrichtung (1) gemäß einem der Ansprüche 1 bis 10, wobei die Brandschutzvorrichtung mittels der Laschen (52) an dem feuerfesten Rohr (2) befestigt ist, und wobei die Brandschutzvorrichtung (1) dazu angepasst ist, um eine Verbindungsstelle des brennbaren (4) und des feuerfesten (2) Rohres und einen die Rohre verbindenden, dichtenden Rohr-Verbinder (6) herum montiert zu werden.

## Claims

1. Fire protection device (1) for the fireproof sealing of a connection between a combustible pipe (4) and a fire-resistant pipe (2), having
a fire protection sleeve (100) which has a fire protection element (40) and a cover (110) for retaining the fire protection element (40),
a plurality of flaps (52) which are adapted to together form a retention portion (16) for securing the fire protection device (1) to the fire-resistant pipe,
wherein the fire protection device (1) is adapted to be mounted around a connection location of a combustible pipe (4) and a fire-resistant pipe (2) and a sealing pipe connector (6) which connects the pipes,
**characterised in that** the flaps (52) have a base portion (62) having a bent-over portion (70) for receiving a hose clip (54), by means of which the fire protection device (1) can be secured to the fire-resistant pipe (2),
wherein the bent-over portion is constructed in such a manner that the hose clip can be placed or introduced into this portion.

2. Fire protection device according to claim 1,
**characterised in that** the flaps (52) are formed integrally on the cover (110) of the fire protection sleeve (100).

3. Fire protection device (1) according to claim 1,
**characterised in that** a plurality of securing arms (102) are formed on the sleeve (110), wherein the flaps (52) can be connected to the securing arms (102) in a positive-locking manner by means of a snap-fit connection.

4. Fire protection device according to claim 3,
**characterised in that** the flaps (52) have a positive-locking portion (60) with a locking projection (64) for engagement in a recess (106) in the securing arms (102).

5. Fire protection device according to any one of the preceding claims,
**characterised in that** the fire protection sleeve (100) extends substantially over the entire axial length of the pipe connector (6).

6. Fire protection device according to any one of the preceding claims,
**characterised in that** two, four or more flaps (52) are provided.

7. Fire protection device according to claim 4,
wherein there are constructed at lateral ends of the flap (52) in the region of a central recess (65) two guides (66, 68) for guiding the securing arm (102) which are constructed as bent-over sheet metal portions.

8. Fire protection device according to any one of the preceding claims,
**characterised in that** the bent-over portion (70-73) of the flap (52) is substantially U-shaped in cross-section.

9. Fire protection device according to any one of claims 3 to 8,
**characterised in that** the positive-locking portion (60) of the flap (52) extends in an inclined manner from an inclined portion (74) of the flap (52) away from the base portion (52).

10. Fire protection device according to any one of claims 4 to 9,
**characterised in that** the positive-locking portion (60) has a central recess (65) from which a locking projection (64) protrudes, wherein the locking projection (64) extends from an edge of the central recess (65) in the direction of the base portion (62) and tapers in a slightly trapezoidal manner.

11. Use of a fire protection device (1) for the fireproof sealing of a connection between a combustible pipe (4) and a fire-resistant pipe (2), wherein the fire protection device (1) is constructed according to any one of claims 1 to 10, and
wherein the fire protection device (1) is mounted around a connection location of a combustible pipe (4) and a fire-resistant pipe (2) and a sealing pipe connector (6) which connects the pipes.

12. Fire protection system for the fireproof sealing of a connection between a combustible pipe (4) and a fire-resistant pipe (2), having
the combustible pipe (4),
the fire-resistant pipe (2),
a sealing pipe connector (6) which receives the pipes therein, and
a fire protection device (1) according to any one of claims 1 to 10, wherein the fire protection device is secured to the fire-resistant pipe (2) by means of the flaps (52),
and wherein the fire protection device (1) is adapted to be mounted around a connection location of the combustible pipe (4) and the fire-resistant pipe (2) and a sealing pipe connector (6) which connects the pipes.

## Revendications

1. Dispositif de protection contre l'incendie (1) servant au cloisonnement coupe-feu d'un raccordement entre un tuyau inflammable (4) et un tuyau réfractaire (2), avec
un manchon de protection contre l'incendie (100), qui présente un élément de protection contre l'incendie (40) et une chemise (110) servant à maintenir l'élément de protection contre l'incendie (40),
plusieurs brides (52), qui sont adaptées pour former conjointement une section de maintien (16) servant à fixer le dispositif de protection contre l'incendie (1) au niveau du tuyau réfractaire,
dans lequel le dispositif de protection contre l'incendie (1) est adapté pour être monté tout autour d'un emplacement de raccordement d'un tuyau inflammable (4) et d'un tuyau réfractaire (2) et tout autour d'un connecteur de tuyaux (6) raccordant les tuyaux, assurant l'étanchéité,
**caractérisé en ce que** les brides (52) présentent une section de pied (62) avec une section (70) repliée servant à recevoir un collier d'attache pour tuyau flexible (54), au moyen duquel le dispositif de protection contre l'incendie (1) peut être fixé au niveau du tuyau réfractaire (2),
dans lequel la section repliée est réalisée de telle sorte que le collier de serrage pour tuyau flexible peut être placé dans ladite section ou peut être guidé de part en part à travers celle-ci.

2. Dispositif de protection contre l'incendie selon la revendication 1,
**caractérisé en ce que** les brides (52) sont formées d'un seul tenant au niveau de la chemise (110) du manchon de protection contre l'incendie (100).

3. Dispositif de protection contre l'incendie (1) selon la revendication 1,
**caractérisé en ce que** plusieurs bras de fixation (102) sont formés au niveau de la chemise (110), dans lequel les brides (52) peuvent être raccordées aux bras de fixation (102) par complémentarité de forme au moyen d'un système de raccordement à déclic.

4. Dispositif de protection contre l'incendie selon la revendication 3,
**caractérisé en ce que** les brides (52) présentent une section à complémentarité de forme (60) avec un ergot d'enclenchement (64) destiné à être enclenché dans un évidement (106) au niveau des bras de fixation (102).

5. Dispositif de protection contre l'incendie selon l'une quelconque des revendications précédentes,
**caractérisé en ce que** le manchon de protection contre l'incendie (100) s'étend sensiblement sur la longueur axiale totale du connecteur de tuyaux (6).

6. Dispositif de protection contre l'incendie selon l'une quelconque des revendications précédentes,
**caractérisé en ce que** deux, quatre brides (52) ou plus sont prévues.

7. Dispositif de protection contre l'incendie selon la revendication 4,
dans lequel sont réalisées, au niveau d'extrémités latérales de la bride (52), dans la zone d'un évidement (65) central, deux coulisses (66, 68) servant à guider le bras de fixation (102), qui sont réalisées en tant que sections en tôle repliées.

8. Dispositif de protection contre l'incendie selon l'une quelconque des revendications précédentes,
**caractérisé en ce que** la section (70-73) repliée de la bride (52) est sensiblement en forme de U dans la section transversale.

9. Dispositif de protection contre l'incendie selon l'une quelconque des revendications 3 à 8,
**caractérisé en ce que** la section à complémentarité de forme (60) de la bride (52) s'étend de manière à former un chanfrein par rapport à une section oblique (74) de la bride (52) de manière à s'éloigner de la section de pied (62).

10. Dispositif de protection contre l'incendie selon l'une quelconque des revendications 4 à 9,
**caractérisé en ce que** la section à complémentarité de forme (60) présente un évidement (65) central, à partir duquel un ergot d'enclenchement (64) s'étend en faisant saillie, dans lequel l'ergot d'enclenchement (64) s'étend depuis un bord de l'évidement (65) central en direction de la section de pied (62) et converge de manière à présenter une forme légèrement trapézoïdale.

11. Utilisation d'un dispositif de protection contre l'incendie (1) servant au cloisonnement coupe-feu d'un système de raccordement entre un tuyau inflammable (4) et un tuyau réfractaire (2),
dans laquelle le dispositif de protection contre l'incendie (1) est réalisé selon l'une quelconque des revendications 1 à 10, et
dans laquelle le dispositif de protection contre l'incendie (1) est monté tout autour d'un emplacement de raccordement d'un tuyau inflammable (4) et d'un tuyau réfractaire (2) et tout autour d'un connecteur de tuyaux (6) raccordant les tuyaux, assurant l'étanchéité.

12. Système de protection contre l'incendie servant au cloisonnement coupe-feu d'un système de raccordement entre un tuyau inflammable (4) et un tuyau réfractaire (2), avec
le tuyau inflammable (4),
le tuyau réfractaire (2),
un connecteur de tuyaux (6) recevant en son sein les tuyaux, assurant l'étanchéité, et
un dispositif de protection contre l'incendie (1) selon l'une quelconque des revendications 1 à 10, dans lequel le dispositif de protection contre l'incendie est fixé au moyen des brides (52) au niveau du tuyau réfractaire (2)
et dans lequel le dispositif de protection contre l'incendie (1) est adapté pour être monté tout autour d'un emplacement de raccordement du tuyau inflammable (4) et du tuyau réfractaire (2) et tout autour d'un connecteur de tuyaux (6) raccordant les tuyaux, assurant l'étanchéité.
